# EUROPÄISCHE PATENTSCHRIFT

(11) **EP 1 254 332 B1**
(45) Veröffentlichungstag und Bekanntmachung des Hinweises auf die Patenterteilung: **01.10.2003**
(21) Anmeldenummer: 01946924.6
(22) Anmeldetag: 23.01.2001
(51) Int. Cl.: F16K 47/04

(54) **VENTIL, INSBESONDERE DRUCKREDUZIERVENTIL**
VALVE, IN PARTICULAR PRESSURE REDUCING VALVE
SOUPAPE, EN PARTICULIER DETENDEUR

(30) Priorität: 25.01.2000 AT 1032000
(43) Veröffentlichungstag der Anmeldung: 06.11.2002
(73) Patentinhaber: Schwarz, Alois, A-6382 Kirchdorf in Tirol (AT)
(72) Erfinder: Schwarz, Alois, A-6382 Kirchdorf in Tirol (AT)
(74) Vertreter: Atzwanger, Richard, Dipl.-Ing. Patentanwalt
(86) Internationale Anmeldenummer: AT0100017
(87) Internationale Veröffentlichungsnummer: WO01055627

(56) Entgegenhaltungen:
- DE-C- 4 440 241
- US-A- 1 347 500
- US-A- 4 086 764
- US-A- 4 380 153
- US-A- 5 727 388

## Beschreibung

Die gegenständliche Erfindung betrifft ein Ventil, insbesondere ein Druckreduzierventil, gemäß Oberbegriff von Anspruch 1 wie es beispielsweise aus US-A-4 380 153 bekannt ist.

Bei einer Vielzahl von technischen Anlagen ist es erforderlich, den Druck von unter hohem Druck stehenden Medien, wie Flüssigkeiten oder Gasen, herabzusetzen. Dies trifft z.B. beim Transport von Gasen zu, welche unter hohem Druck über großen Entfernungen gefördert werden. Ebenso gilt dies für Wasserversorgungsanlagen, in welchen deshalb, da die Wasserversorgung auch bei hoch gelegenen Abnehmern gewährleistet sein muß, das Wasser unter hohem Druck steht. Bei der Abgabe dieser Medien an Verbraucher muß jedoch der bestehende Druck auf einen den Erfordernissen entsprechenden Druck herabgesetzt werden. Um dieser Bedingung zu entsprechen, werden in derartigen Anlagen Ventile, insbesondere Druckreduzierventile, durch welche die Medien hindurchgeleitet werden, angeordnet. Weitere Anwendungsbereiche sind jegliche technische Anlagen, in welchen sich ein unter hohem Druck stehendes gasförmiges oder flüssiges Medium befindet, dessen Druck herabgesetzt werden muß, wie Kälteanlagen, Druckluftversorgungsanlagen und hydraulische Anlagen.

Bei den bisher bekannten Anlagen, in welchen eine Druckreduzierung bewirkt wird, bedeutet dies jedoch, daß hierdurch die im Medium enthaltene Druckenergie insbesondere in Wärme umgesetzt wird, welche nicht genützt wird, weswegen sie verloren geht. Der gegenständlichen Erfindung liegt somit die Aufgabe zugrunde, ein Ventil zu schaffen, durch welches die in Medien enthaltene Druckenergie in kinetische Energie und gegebenenfalls in elektrische Energie umgesetzt werden kann.

Es sind seit vielen Jahren Turbinen bekannt, deren Rotoren mittels strömender Medien, insbesondere mittels Wasser, in Rotation gesetzt werden, wodurch kinetische Energie und mittels Elektrogeneratoren elektrische Energie erzeugt werden kann. Bekannte Turbinen sind jedoch deshalb nicht als Sperrventile verwendbar, da durch diese keine Absperrung des unter Druck stehenden Mediums bewirkt werden kann. Der Grund hierfür liegt darin, daß bekannte Turbinen aus Metall hergestellt sind, wodurch aufgrund der Wärmedehnungen keine solche Paßgenauigkeit des Rotors im Gehäuse erzielbar ist, daß sie auch als Sperrventil wirken können.

Der gegenständlichen Erfindung liegt somit die Aufgabe zugrunde, ein Ventil mit einem in einem zylindrischen Hohlraum angeordneten Rotor zu schaffen, durch welche sowohl die Funktion eines Sperrventils als auch die Funktion eines Druckreduzierventils erfüllt wird, wobei die bei der Funktion eines Druckreduzierventiles anfallende Energie gewonnen werden kann. Dies wird bei einem gattungsgemäßen Ventil erfindungsgemäß dadurch erzielt, daß das Gehäuse und der Rotor aus einem keramischen Material hergestellt sind und die zwischen den Ausnehmungen befindlichen Bereiche der Mantelfläche an die Innenfläche des im Gehäuse befindlichen Hohlraumes und die Stirnflächen des Rotors an die Stirnflächen des Gehäuses abdichtend anliegen.

Da keramisches Material keinen maßgeblichen Wärmespannungen unterliegt, können sowohl der Rotor als auch das Gehäuse mit sehr hoher Paßgenauigkeit hergestellt werden, wodurch durch dieses Ventil bei einem Blockieren der Welle des Rotors die Funktion eines Sperrventiles erfüllt werden kann. Sobald demgegenüber die Welle des Rotors freigegeben wird, wobei die Rotationsgeschwindigkeit der Welle elektronisch geregelt werden kann, erfüllt dieses Ventil die Funktion eines Reduzierventiles. Die über die Welle des Rotors übertragene elektrische Energie kann in weiterer Folge gewonnen werden, wobei insbesondere ein Elektrogenerator betrieben werden kann. Die durch den Elektrogenerator gewonnene Energie kann in einem Akkumulator gespeichert werden. Sie kann jedoch auch in Heizenergie umgewandelt werden, welche z.B. in einen thermischen Speicher eingespeist wird.

Vorzugsweise sind die im Rotor befindlichen Ausnehmungen als radial ausgerichtete Nuten ausgebildet. Nach einer bevorzugten Ausführungsform sind die Ausnehmungen mit seitlichen Wangen ausgebildet, sodaß sie nur nach radial außen offen sind. Weiters sind vorzugsweise der Zuströmkanal und der Abströmkanal zueinander angenähert diametral angeordnet. Zudem kann der Rotor mit einer zentralen Ausnehmung ausgebildet sein, in welche eine aus elastischem Material hergestellte Muffe eingesetzt ist.

Nach einer bevorzugten Ausführungsform ist das Gehäuse als zweiteiliger, insbesondere quadrischer Körper ausgebildet, wobei der eine Teil mit dem Hohlraum und dem Zuströmkanal sowie dem Abströmkanal ausgebildet ist und der andere Teil als Abdeckplatte ausgebildet ist.

Der Gegenstand der Erfindung ist nachstehend anhand eines in der Zeichnung dargestellten Ausführungsbeispiels erläutert. Es zeigen:
- Fig.1: eine erste Ausführungsform erfindungsgemäße Ventil in auseinandergezogener, axonometrischer Darstellung,
- Fig.2: dieses Ventil im Schnitt nach der Linie II-II der Fig.3,
- Fig.3: dieses Ventil im Schnitt nach der Linie III-III der Fig.2,
- Fig.4: eine zweite Ausführungsform eines erfindungsgemäßen Ventils, in auseinandergezogener Darstellung,
- Fig.5: das Ventil nach Fig.4, im Schnitt nach der Linie V-V der Fig.6,
- Fig.6: das Ventil nach Fig.5, im Schnitt nach der Linie VI-VI der Fig.5,
- Fig.7: einen Bestandteil des Ventils nach Fig.4, in axialem Schnitt und in auseinandergezogener Darstellung,
- Fig.8: einen weiteren Bestandteil dieses Ventils, im Schnitt nach der Linie VIII-VIII der Fig.9, und
- Fig.9: diesen weiteren Bestandteil, im Schnitt nach der Linie IX-IX der Fig.8.

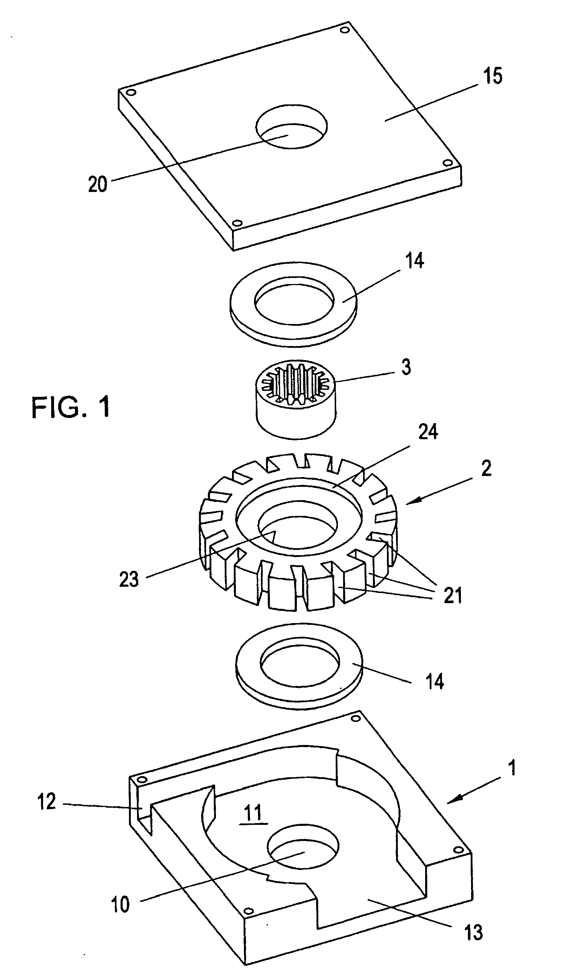

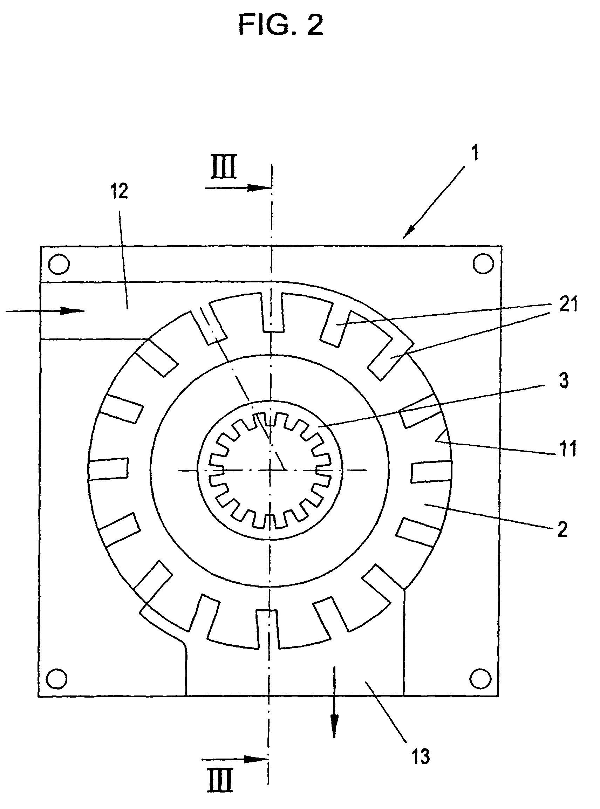

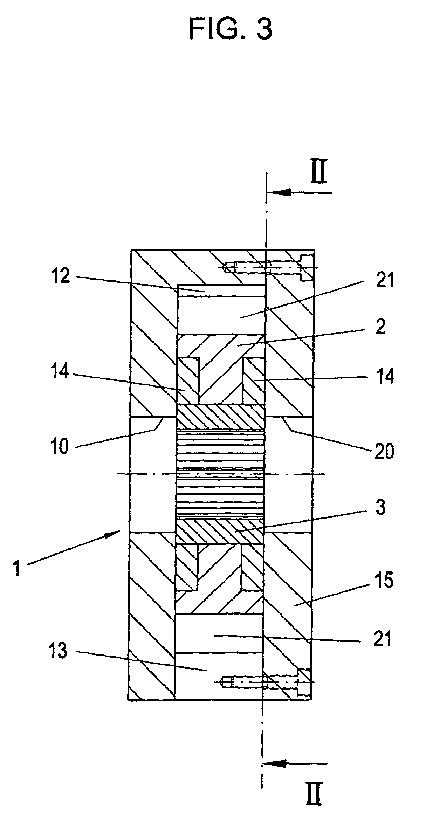

Das in den Fig.1 bis 3 dargestellte Ventil besteht aus einem Gehäuse 1, welches mit einem angenähert zylindrischen Hohlraum 11, einem Zuströmkanal 12 und mit einem Abströmkanal 13 ausgebildet ist und welches mittels einer Abdeckung 15 verschließbar ist.

In den zylindrischen Hohlraum 11 ist unter Zwischenlage von zwei Dichtungsscheiben 14 ein zylindrischer Rotor 2 eingesetzt, welcher an seiner Mantelfläche mit einer Vielzahl von radial ausgerichteten, schlitzartigen Hohlräumen 21 ausgebildet ist. Zur Aufnahme der Dichtungsringe 14 ist der Rotor 2 an seinen beiden Stirnflächen mit zylindrischen Ausnehmungen 24 versehen. In eine zentrische Bohrung 23 des Rotors 2 ist eine Kupplungshülse 3 eingesetzt, welche an ihrer radial inneren Seite mit Nuten bzw. Keilen zur Kupplung mit einer Welle ausgebildet ist. Diese Welle durchsetzt das Gehäuse 1 in einer Bohrung 10 und die Abdeckung 15 in einer Bohrung 20.

Sowohl das Gehäuse 1 und die Abdeckung 15 als auch der Rotor 2 sind aus einem keramischen Material hergestellt. Da ein keramisches Material keinen maßgebliche Wärmedehnungen unterliegt, können die Ausnehmungen und der Rotor 2 mit so hoher Paßgenauigkeit hergestellt werden, daß zwischen diesen beiden Bauteilen kein Medium hindurchströmen kann. Da demgegenüber die Kupplungshülse 3 aus einem elastischen Material hergestellt ist, werden auf die Welle wirkende Stellkräfte durch die Kupplungshülse 3 aufgenommen, sodaß sie auf den Rotor 2 nicht zur Wirkung kommen bzw. dieser im Hohlraum 11 schwimmend gelagert ist.

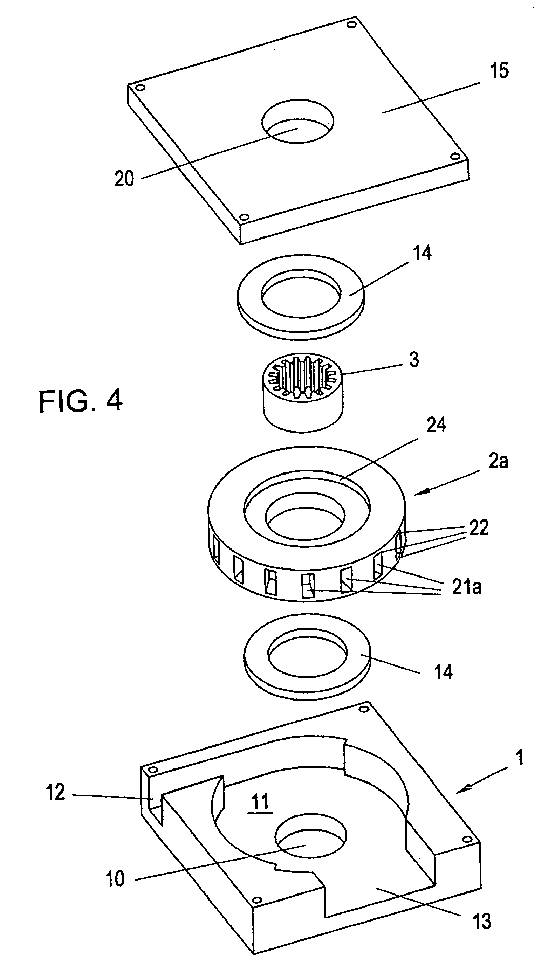

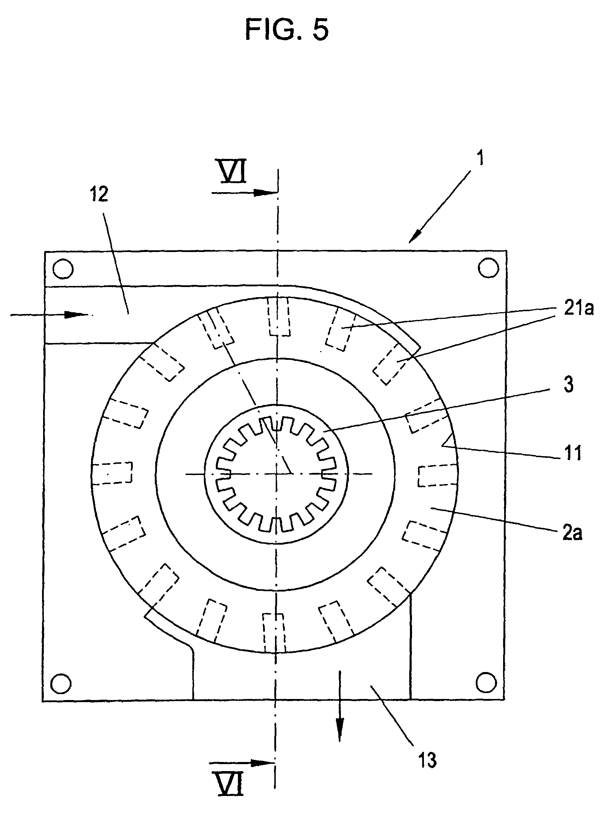

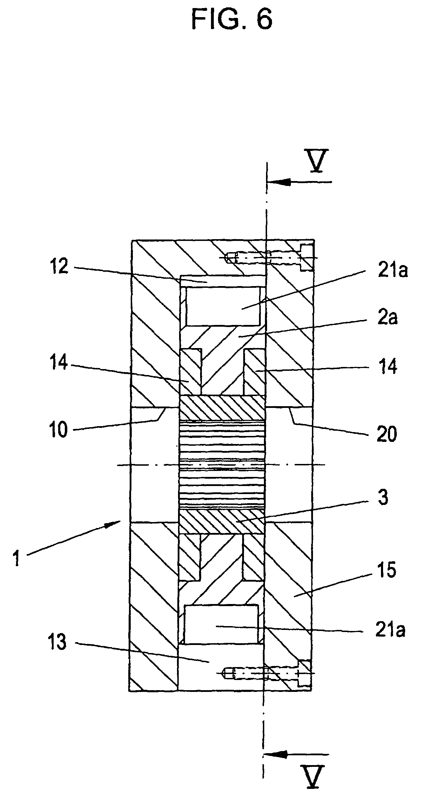

Das in den Fig.4 bis 6 dargestellt zweite Ausführungsbeispiel unterscheidet sich vom ersten Ausführungsbeispiel dadurch, daß die Ausnehmungen 21a des Rotors 2a durch seitliche Wangen 22 abgeschlossen sind, wodurch die Ausnehmungen 21a nur nach radial außen offen sind.

Im Betrieb dieser Einrichtung wird der Kanal 12 des Gehäuses 1 an eine Leitung, in welcher sich unter Druck stehendes Medium befindet, angeschlossen. Solange der Rotor 2 blockiert ist, erfüllt diese Einrichtung die Funktion eines Absperrventiles. Sobald jedoch Medium mit vermindertem Druck über den Abströmkanal 13 in eine Verbraucherleitung abströmen soll, wird der Rotor 2, 2a freigegeben, wodurch das Medium an den Flanken derjenigen Nuten 21, 21a, welche sich im Zuströmkanal 12 befinden, zur Wirkung kommt, wodurch der Rotor 2, 2a in Drehung versetzt wird. Das in den Nuten 21, 21a befindliche Medium gelangt hierdurch mit vermindertem Druck in den Abströmkanal 13. Die durch den Rotor 2, 2a erzeugte Rotationsenergie wird über die mit dem Rotor 2, 2a gekuppelte Welle übertragen, wodurch sie gewonnen werden kann. Vorzugsweise wird mittels der Welle ein Elektrogenerator angetrieben, wobei die durch diesen erzeugte elektrische Energie entweder in einem Akkumulator gespeichert werden oder in Heizenergie, welche in einem thermischen System gespeichert wird, umgewandelt werden kann.

Da durch dieses Ventil sowohl die Funktion eines Absperrventils als auch die Funktion eines Reduzierventils erfüllt wird, kann sie in einer Vielzahl von technischen Anlagen eingesetzt werden, um Energie, welche bisher verloren geht, zu gewinnen und zu nützen. Die Steuerung der Verdrehung des Rotors 2 und damit die Steuerung des Reduzierventils erfolgt über eine auf den Elektrogenerator wirkende elektrische Schaltung.

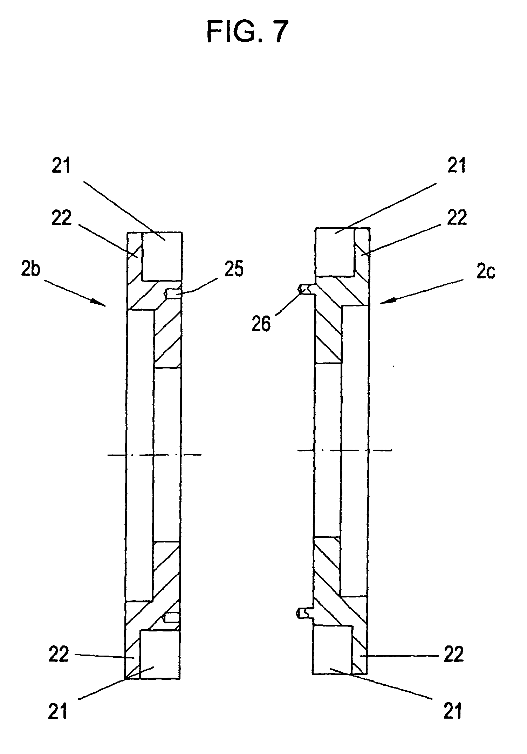

Wie dies weiters in Fig.7 dargestellt ist, kann der Rotor aus zwei angenähert symmetrischen Teilen 2b und 2c bestehen, wobei der Teil 2b mit Bohrungen 25 und der Teil 2c mit diesem zugeordneten Zapfen 26 ausgebildet ist, durch welche sie miteinander verbindbar sind. Hierdurch wird eine Vereinfachung in der Herstellung dieser Bauteile erzielt. Es ist dabei zu berücksichtigen, daß Bauteile aus keramischem Material nur durch Pressung herstellbar sind.

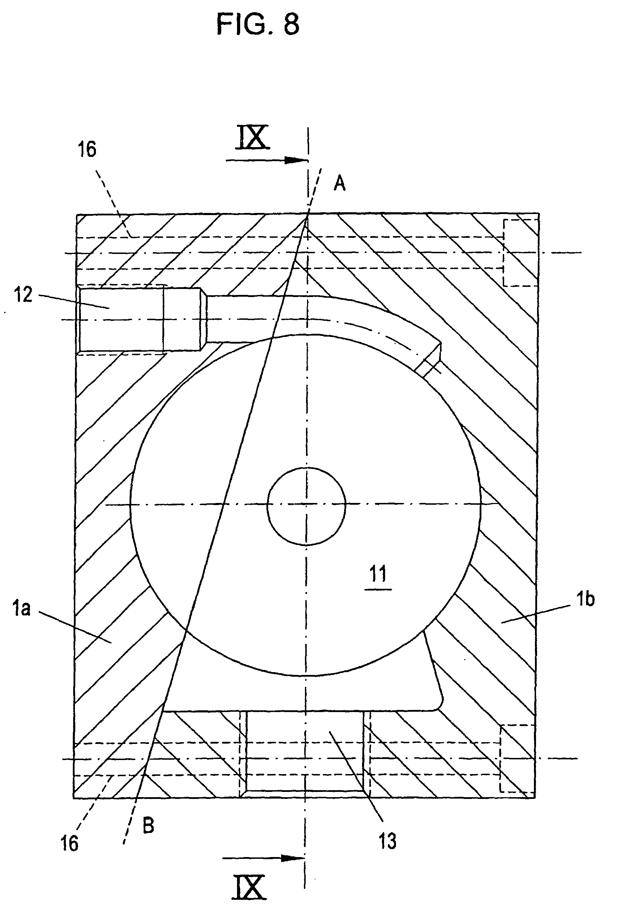

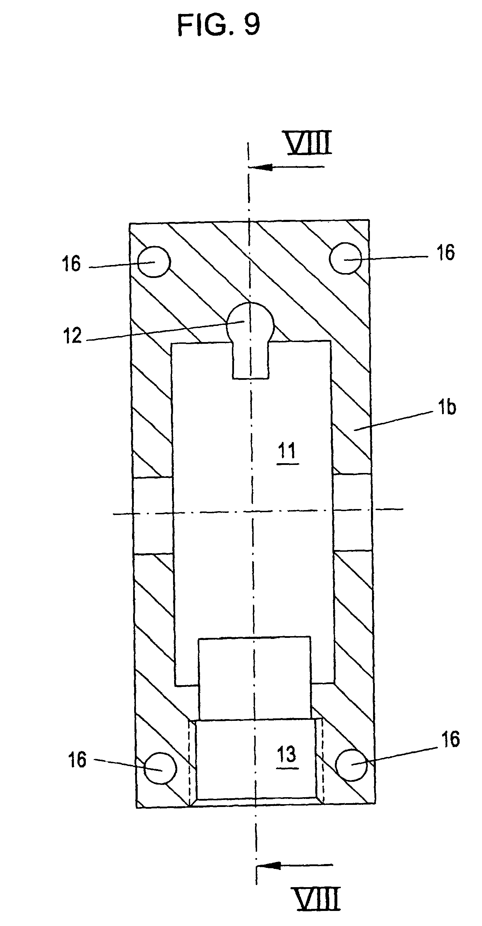

Wie weiters aus den Fig.8 und 9 ersichtlich ist, kann das Gehäuse längs der Linie A-B in zwei angenähert quaderförmige Bauteile 1a und 1b unterteilt sein, welche mit jeweils einer teilzylindrischen Ausnehmung ausgebildet sind. Diese beiden Bauteile 1a und 1b sind mit Bohrungen 16 ausgebildet, in welche Spannbolzen einsetzbar sind. Weiters sind die beiden Bauteile 1a und 1b mit Ausnehmungen zur Ausbildung des Zuströmkanals 12 und des Abströmkanals 13 ausgebildet.
Bei dieser Ausbildung kann der Rotor in die teilzylindrischen Ausnehmungen eingesetzt werden, welche hierauf mittels der in die Bohrungen 16 eingesetzten Spannbolzen miteinander verbunden werden.

## Patentansprüche

1. Ventil, insbesondere Druckreduzierventil, mit einem Gehäuse (1), welches mit einem zylindrischen Hohlraum (11) für einen darin angeordneten Rotor (2, 2a), mit einem Zuflußkanal (12) für ein unter Druck stehendes Medium und mit einem Abflußkanal (13) für das mit vermindertem Druck abströmende Medium ausgebildet ist und der Rotor (2, 2a) als zylindrischer Körper ausgebildet ist, welcher an seiner Mantelfläche mit einer Vielzahl von in Drehrichtung im Abstand voneinander befindlichen Ausnehmungen (21, 21a) ausgebildet ist, **dadurch gekennzeichnet, daß** das Gehäuse (1) und der Rotor (2, 2a) aus einem keramischen Material hergestellt sind und die zwischen den Ausnehmungen (21, 21a) befindlichen Bereiche der Mantelfläche an die Innenfläche des im Gehäuse (1) befindlichen Hohlraumes (11) und die Stirnflächen des Rotors (2, 2a) an die Stirnflächen des Gehäuses (1) abdichtend anliegen.

2. Ventil nach Patentanspruch 1, **dadurch gekennzeichnet, daß** die im Rotor (2) befindlichen Ausnehmungen als radial ausgerichtete Nuten (21) ausgebildet sind.

3. Ventil nach einem der Patentansprüche 1 und 2, **dadurch gekennzeichnet, daß** die Ausnehmungen (21a) mit seitlichen Wangen (22) ausgebildet sind, sodaß sie nur nach radial außen hin offen sind.

4. Ventil nach einem der Patentansprüche 1 bis 3, **dadurch gekennzeichnet, daß** der Zuströmkanal (12) und der Abströmkanal (13) zueinander angenähert diametral angeordnet sind.

5. Ventil nach einem der Patentansprüche 1 bis 4, **dadurch gekennzeichnet, daß** der Rotor (2, 2a) mit einer zentralen Ausnehmung (23) ausgebildet ist, in welche ein aus elastischem Material hergestelltes Kupplungselement (3) für eine das Gehäuse (1) durchsetzende Welle eingesetzt ist.

6. Ventil nach Patentanspruch 5, **dadurch gekennzeichnet, daß** das Kupplungselement durch eine aus elastischem Material hergestellte Hülse (3) gebildet ist.

7. Ventil nach einem der Patentansprüche 1 bis 6, **dadurch gekennzeichnet, daß** das Gehäuse (1) als zweiteiliger, insbesondere quadrischer Körper ausgebildet ist, wobei ein Teil mit dem Hohlraum (11) und dem Zuströmkanal (12) sowie dem Abströmkanal (13) ausgebildet ist und der andere Teil als Abdeckplatte (15) ausgebildet ist.

## Claims

1. Valve, in particular pressure reducing valve, with a casing (1) which is designed with a cylindrical cavity (11) for a rotor (2, 2a) arranged therein, and the rotor (2, 2a) is designed as a cylindrical body which is produced on its outer surface with a multiplicity of recesses (21, 21a) located at a distance from one another in the direction of rotation, with an inflow duct (12) for a medium which is under pressure and with an outflow duct (13) for the medium flowing out with reduced pressure, **characterized in that** the casing (1) and rotor (2, 2a) are produced from a ceramic material, and the regions of the outer surface which are located between the recesses (21, 21a) come to bear sealingly against the inner surface of the cavity (11) located in the casing (1), and the end faces of the rotor (2, 2a) come to bear sealingly against the end faces of the casing (1).

2. Valve according to Patent Claim 1, **characterized in that** the recesses located in the rotor (2) are designed as radially oriented grooves (21).

3. Valve according to one of Patent Claims 1 and 2, **characterized in that** the recesses (21a) are produced with lateral cheeks (22), so that they are open only radially outward.

4. Valve according to one of Patent Claims 1 to 3, **characterized in that** the inflow duct (12) and the outflow duct (13) are arranged approximately diametrically to one another.

5. valve according to one of Patent Claims 1 to 4, **characterized in that** the rotor (2, 2a) is designed with a central recess (23), into which is inserted a coupling element (3), produced from elastic material, for a shaft passing through the casing (1).

6. Valve according to Patent Claim 5, **characterized in that** the coupling element is formed by a sleeve (3) produced from elastic material.

7. Valve according to one of Patent Claims 1 to 6, **characterized in that** the casing (1) is designed as a two-part, in particular square body, one part being produced with the cavity (11) and inflow duct (12) and with the outflow duct (13), and the other part being designed as a cover plate (15).

## Revendications

1. Soupape, en particulier soupape réductrice, ayant un carter (1) qui est formé d'un espace creux (11) cylindrique pour un rotor (2, 2a) qui y est disposé, un canal d'amenée (12) pour moyen sous pression et un canal de décharge (13) pour le moyen s'écoulant avec une pression réduite et le rotor (2, 2a) est formé en tant que corps cylindrique qui est formé sur sa surface latérale d'une pluralité d'évidements (21, 21a) se trouvant dans le sens de la rotation distants les uns des autres, **caractérisé en ce que** le carter (1) et le rotor (2, 2a) sont fabriqués dans un matériau en céramique et les zones de la surface latérale se trouvant entre les évidements (21, 21a) sont collées de manière étanche sur les surfaces intérieures de l'espace creux (11) se trouvant dans le carter (1) et les surfaces avant du rotor (2, 2a) sur les surfaces avant du carter (1).

2. Soupape selon la revendication 1, **caractérisée en ce que** les évidements se trouvant dans le rotor (2) sont formés en tant que rainures (21) orientées radialement.

3. Soupape selon l'une quelconque des revendications 1 et 2, **caractérisée en ce que** les évidements (21a) sont formés de joues latérales (22), de telle sorte qu'elles ne sont ouvertes que vers l'extérieur radialement.

4. Soupape selon l'une quelconque des revendications 1 à 3, **caractérisée en ce que** le canal d'amenée (12) et le canal de décharge (13) rapprochés l'un de l'autre sont disposés diamétralement.

5. Soupape selon l'une quelconque des revendications 1 à 4, **caractérisée en ce que** le rotor (2, 2a) est formé d'un évidement central (23), dans lequel un élément de liaison (3) fabriqué en matériau élastique est utilisé pour un arbre s'introduisant dans le carter (1).

6. Soupape selon la revendication 5, **caractérisée en ce que** l'élément de liaison est formé par un manchon (3) fabriqué en matériau élastique.

7. Soupape selon l'une quelconque des revendications 1 à 6, **caractérisée en ce que** le carter (1) est formé en tant que corps en deux parties, en particulier quadratique, moyennant quoi, une partie est formée avec l'espace creux (11) et le canal d'amenée (12) ainsi qu'avec le canal de décharge (13) et l'autre partie est formée en tant que plaque de recouvrement (15).
